# EUROPEAN PATENT APPLICATION

(11) **EP 4 832 395 A1**
(43) Date of publication of application: **28.10.2026**
(21) Application number: 24906247.2
(22) Date of filing: 13.12.2024
(51) Int. Cl.: H04L 5/00, H04W 24/10

(54) **CHANNEL DATA TRANSMISSION METHOD AND APPARATUS, ELECTRONIC DEVICE AND STORAGE MEDIUM**

(30) Priority: 22.12.2023 CN 202311785851
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: SHI, Ziye, Beijing 100032 (CN); HAN, Shuangfeng, Beijing 100032 (CN); WANG, Hanning, Beijing 100032 (CN); SU, Xin, Beijing 100032 (CN)
(74) Representative: Herrero & Asociados, S.L.
(86) International application number: PCT/CN2024/139071
(87) International publication number: WO 2025/130766

(57) **Abstract**

Embodiments of the present disclosure relate to a channel data transmission method and apparatus, an electronic device and a storage medium. The method comprises: sending first instruction information to a receiving terminal, wherein the first instruction information is used for instructing the receiving end to directly map compressed channel data output by a channel compression model to a time-frequency resource.

## Description

### CROSS-REFERENCE TO RELATED APPLICATIONS

The present disclosure claims priority to Chinese Patent Application No. 202311785851.7, filed on December 22, 2023 in the China National Intellectual Property Administration, the contents of which are incorporated herein by reference.

### TECHNICAL FIELD

The present disclosure relates to the field of communication technologies, and in particular, to a channel data transmission method, a channel data transmission apparatus, an electronic device, and a storage medium.

### BACKGROUND

In the field of mobile communication technologies, after receiving a signal from a signal transmitting terminal, a signal receiving terminal feeds back channel state information of a communication channel, so as to enable the signal transmitting terminal to accurately obtain or learn a channel state and improve signal transmission quality. For example, in a Multiple-input Multiple-output (MIMO) system, obtaining Channel State Information (CSI) to implement beamforming is a key means for improving transmission performance. Especially for Frequency Division Duplex (FDD) systems, since there is no complete reciprocity between uplink and downlink channels, the signal transmitting terminal needs to obtain complete downlink CSI through feedback from the signal receiving terminal. In a New Radio (NR) system, the signal receiving terminal mainly relies on codebooks for CSI feedback. For example, codebook types such as CSI Type I, Type II, and Type II enhanced may be used to feed back a Rank Indicator (IR), a Precoding Matrix Indicator (PMI), a Channel Quality Indicator (CQI), or other related information.

A CSI feedback solution provided by the related art adopts a data-driven deep learning method to configure a corresponding channel compression model and a channel decompression model. For example, the signal receiving terminal is configured with the channel compression model. The channel compression model may extract a low-dimensional feature from channel data, generate compressed channel data, and then transmit the compressed channel data to the signal transmitting terminal. The channel decompression model configured at the signal transmitting terminal may decompress the received compressed channel data to obtain channel data. In the above signal state information feedback solution, the compressed signal data output by the channel compression model generally needs to undergo quantization, channel coding, scrambling, and other processing before transmission. Therefore, the above CSI feedback solution may have defects of high transmission overhead and complex processing flows.

### SUMMARY

In order to solve the above technical problem, some embodiments of the present disclosure provide a channel data transmission method, a channel data transmission apparatus, an electronic device, and a storage medium.

Some embodiments of the present disclosure provide a channel data transmission method. The method includes:
transmitting first indication information to a receiving terminal. The first indication information is configured to instruct the receiving terminal to directly map compressed channel data output by a channel compression model onto a time-frequency resource.

In some embodiments, the first indication information may be further configured to instruct the receiving terminal to directly map a neighboring reference signal onto the time-frequency resource.

In some embodiments, before transmitting the first indication information to the receiving terminal, the method may further include:
obtaining channel assessment quality.

The transmitting the first indication information to the receiving terminal includes:
transmitting the first indication information to the receiving terminal in a case where the channel assessment quality satisfies a first preset threshold.

In some embodiments, the channel assessment quality may include any one of a channel signal-to-noise ratio, a bit error rate and a channel quality indicator. In a case where the channel assessment quality includes the channel signal-to-noise ratio, the obtaining the channel assessment quality may include:
receiving a sounding reference signal transmitted by the receiving terminal, and calculating, based on the sounding reference signal, the channel signal-to-noise ratio.

In some embodiments, the method may further include:
obtaining a pre-trained channel compression model, a pre-trained channel decompression model, and the quantity of the compressed channel data input into the channel decompression model.

In some embodiments, the method may further include:
transmitting the pre-trained channel compression model to the receiving terminal.

In some embodiments, the method may further include:
obtaining a normalization manner adopted by the receiving terminal to perform normalization processing on the compressed channel data output by the channel compression model; and transmitting the normalization manner to the receiving terminal.

In some embodiments, the method may further include:
transmitting first resource configuration information to the receiving terminal. The first resource configuration information may be configured to instruct the time-frequency resource required by the receiving terminal for transmission of the compressed channel data and the neighboring reference signal.

In some embodiments, the neighboring reference signal may be set within a coherence bandwidth of the compressed channel data.

In some embodiments, before transmitting the first resource configuration information to the receiving terminal, the method may further include:
obtaining the quantity of the compressed channel data input into the channel decompression model and the quantity of neighboring reference signals; and
determining, based on the quantity of the compressed channel data input into the channel decompression model and the quantity of neighboring reference signals, the time-frequency resource required by the receiving terminal for transmission of the compressed channel data and the neighboring reference signal.

In some embodiments, the receiving terminal may transmit the compressed channel data in a combined manner or in a non-combined manner.

In some embodiments, the method may further include:
transmitting second resource configuration information to the receiving terminal. The second resource configuration information may be configured to instruct the time-frequency resource required by the receiving terminal for transmission of a normalization element.

In some embodiments, the method may further include:
obtaining the compressed channel data output by the channel compression model and transmitted by the receiving terminal; and
inputting the compressed channel data into the channel decompression model, such that the channel decompression model decompresses the compressed channel data to recover the channel data.

In some embodiments, the obtaining the compressed channel data output by the channel compression model and transmitted by the receiving terminal may include:
obtaining the neighboring reference signal directly mapped onto the time-frequency resource, and deriving a channel based on the neighboring reference signal; and
obtaining the compressed channel data output by the channel compression model and transmitted by the receiving terminal based on the derived channel.

In some embodiments, the method may further include:
obtaining the normalization element used by the receiving terminal during normalization processing on the compressed channel data.

The obtaining, based on the derived channel, the compressed channel data output by the channel compression model and transmitted by the receiving terminal may include:
obtaining, based on the derived channel and the normalization element, the compressed channel data output by the channel compression model and transmitted by the receiving terminal.

In some embodiments, the normalization manner may be maximum normalization. In a case where the receiving terminal transmits the compressed channel data in the combined manner, the normalization element may be the maximum modulus in at least one compressed channel data combination.

In some embodiments, the method may further include:
re-obtaining channel assessment quality; and
transmitting second indication information to the receiving terminal in a case where the channel assessment quality satisfies a second preset threshold. The second indication information may be configured to instruct the receiving terminal to quantize the compressed channel data output by the channel compression model and map the quantized compressed channel data onto a time-frequency resource.

Some embodiments of the present disclosure further provide a channel data transmission method. The method including:
receiving first indication information transmitted by a transmitting terminal; and
directly mapping, based on the first indication information, compressed channel data output by a channel compression model onto a time-frequency resource, and transmitting the compressed channel data to the transmitting terminal.

In some embodiments, the directly mapping, based on the first indication information, the compressed channel data output by the channel compression model onto the time-frequency resource may include:
directly mapping, based on the first indication information, the compressed channel data output by the channel compression model and a neighboring reference signal onto the time-frequency resource.

In some embodiments, before receiving the first indication information transmitted by the transmitting terminal, the method may further include:
establishing a radio link control layer connection with the transmitting terminal; and
transmitting a sounding reference signal to the transmitting terminal, such that the transmitting terminal calculates a channel signal-to-noise ratio based on the sounding reference signal.

In some embodiments, before receiving the first indication information transmitted by the transmitting terminal, the method may further include:
receiving a pre-trained channel compression model transmitted by the transmitting terminal; and
compressing channel data based on the pre-trained channel compression model and outputting the compressed channel data.

In some embodiments, the method may further include:
receiving first resource configuration information transmitted by the transmitting terminal. The first resource configuration information may be configured to instruct the time-frequency resource required by the receiving terminal for transmission of the compressed channel data and the neighboring reference signal.

The directly mapping the compressed channel data output by the channel compression model onto the time-frequency resource may include:
directly mapping, based on the first resource configuration information, the compressed channel data and the neighboring reference signal onto the time-frequency resource.

In some embodiments, the neighboring reference signal may be set within a coherence bandwidth of the compressed channel data.

In some embodiments, the compressed channel data may be transmitted in a combined manner or in a non-combined manner. In a case where the compressed channel data are transmitted in the combined manner, the method may further include:
performing data combination processing on the compressed channel data output by the channel compression model and obtaining at least one compressed channel data combination.

The directly mapping the compressed channel data output by the channel compression model onto the time-frequency resource may include:
directly mapping the at least one compressed channel data combination onto the time-frequency resource.

In some embodiments, the method may further include:
receiving a normalization manner transmitted by the transmitting terminal; and
performing, based on the normalization manner, normalization processing on the compressed channel data and obtaining normalized compressed channel data.

The directly mapping the compressed channel data output by the channel compression model onto the time-frequency resource may include:
directly mapping the normalized compressed channel data onto the time-frequency resource.

In some embodiments, the method may further include:
receiving second resource configuration information transmitted by the receiving terminal, where the second resource configuration information is configured to instruct the time-frequency resource required by the receiving terminal for transmission of a normalization element; and
mapping, based on the second resource configuration information, the normalization element used in the normalization processing onto the time-frequency resource, and transmitting the normalization element to the transmitting terminal.

In some embodiments, the normalization manner is maximum normalization.

In a case where the receiving terminal transmits the compressed channel data in the combined manner, the normalization element is the maximum modulus in the at least one compressed channel data combination.

In some embodiments, the method further includes:
receiving second indication information transmitted by the transmitting terminal; and
quantizing, based on the second indication information the compressed channel data output by the channel compression model, mapping the quantized compressed channel data onto the time-frequency resource, and transmitting the quantized compressed channel data to the transmitting terminal.

Some embodiments of the present disclosure further provide a channel data transmission apparatus, the apparatus including:
a first indication transmitting module, configured to transmit first indication information to a receiving terminal. The first indication information is configured to instruct the receiving terminal to directly map compressed channel data output by a channel compression model onto a time-frequency resource.

In some embodiments, the first indication information may be further configured to instruct the receiving terminal to directly map a neighboring reference signal onto the time-frequency resource.

In some embodiments, the apparatus may further include:
a first channel quality acquisition module, configured to obtain channel assessment quality before the first indication information is transmitted to the receiving terminal.

The first indication transmitting module may be configured to transmit the first indication information to the receiving terminal in a case where the channel assessment quality satisfies a first preset threshold.

In some embodiments, the channel assessment quality may include any one of a channel signal-to-noise ratio, a bit error rate and a channel quality indicator. The first channel quality acquisition module may be configured to receive a sounding reference signal transmitted by the receiving terminal and calculate the channel signal-to-noise ratio based on the sounding reference signal.

In some embodiments, the apparatus may further include: a first acquisition module, configured to obtain a pre-trained channel compression model, a pre-trained channel decompression model and the quantity of the compressed channel data input into the channel decompression model; and a first transmitting module, configured to transmit the pre-trained channel compression model to the receiving terminal.

In some embodiments, the apparatus may further include:
a normalization-manner acquisition module, configured to obtain a normalization manner adopted by the receiving terminal to perform normalization processing on the compressed channel data output by the channel compression model. The first transmitting module may be further configured to transmit the normalization manner to the receiving terminal.

In some embodiments, the apparatus may further include:
a configuration transmitting module, configured to transmit first resource configuration information to the receiving terminal. The first resource configuration information may be configured to instruct the time-frequency resource required by the receiving terminal for transmission of the compressed channel data and the neighboring reference signal.

In some embodiments, the neighboring reference signal may be set within a coherence bandwidth of the compressed channel data.

In some embodiments, the apparatus may further include:
a quantity acquisition module, configured to obtain the quantity of the compressed channel data input into the channel decompression model and the quantity of neighboring reference signals before the first resource configuration information is transmitted to the receiving terminal; and
a resource determination module, configured to determine the time-frequency resource required by the receiving terminal for transmission of the compressed channel data and the neighboring reference signal based on the quantity of the compressed channel data input into the channel decompression model and the quantity of neighboring reference signals.

In some embodiments, the receiving terminal may be configured to transmit the compressed channel data in a combined manner or a non-combined manner.

In some embodiments, the configuration transmitting module may be further configured to transmit second resource configuration information to the receiving terminal. The second resource configuration information may be configured to instruct the time-frequency resource required by the receiving terminal for transmission of a normalization element.

In some embodiments, the apparatus may further include:
a channel-data acquisition module, configured to obtain the compressed channel data output by the channel compression model and transmitted by the receiving terminal; and
a decompression module, configured to input the compressed channel data into the channel decompression model, such that the channel decompression model decompresses the compressed channel data to recover the channel data.

In some embodiments, the channel-data acquisition module may include:
a channel derivation unit, configured to obtain the neighboring reference signal directly mapped onto the time-frequency resource, and derive a channel based on the neighboring reference signal; and
a data acquisition unit, configured to obtain the compressed channel data output by the channel compression model and transmitted by the receiving terminal based on the derived channel.

In some embodiments, the channel-data acquisition module may further include:
a normalization-element acquisition unit, configured to obtain the normalization element used by the receiving terminal during normalization processing on the compressed channel data.

The data acquisition unit may be configured to obtain the compressed channel data output by the channel compression model and transmitted by the receiving terminal based on the derived channel and the normalization element.

In some embodiments, the normalization manner is maximum normalization.

In a case where the receiving terminal transmits the compressed channel data in the combined manner, the normalization element may be the maximum modulus in the at least one compressed channel data combination.

In some embodiments, the apparatus may further include:
a second channel signal-to-noise ratio acquisition module, configured to re-obtain the channel assessment quality; and
a second indication transmitting module, configured to transmit second indication information to the receiving terminal in a case where the channel assessment quality satisfies a second preset threshold. The second indication information may be configured to instruct the receiving terminal to quantize the compressed channel data output by the channel compression model and map the quantized compressed channel data onto the time-frequency resource.

Some embodiments of the present disclosure further provide a channel data transmission apparatus configured in a receiving terminal, the apparatus includes:
a first indication receiving module, configured to receive first indication information transmitted by a transmitting terminal; and
a first data transmitting module, configured to directly map compressed channel data output by a channel compression model onto a time-frequency resource based on the first indication information, and transmit the compressed channel data to the transmitting terminal.

In some embodiments, the first data transmitting module may be configured to directly map the compressed channel data output by the channel compression model and a neighboring reference signal onto the time-frequency resource based on the first indication information, and transmit the compressed channel data to the transmitting terminal.

In some embodiments, the apparatus may further include:
a connection establishment module, configured to establish a radio link control layer connection with the transmitting terminal before the first indication information transmitted by the transmitting terminal is received; and
a sounding module, configured to transmit a sounding reference signal to the transmitting terminal, such that the transmitting terminal calculates a channel signal-to-noise ratio based on the sounding reference signal.

In some embodiments, the apparatus may further include:
a model receiving module, configured to receive a pre-trained channel compression model transmitted by the transmitting terminal before the first indication information transmitted by the transmitting terminal is received; and
a compression module, configured to compress channel data based on the pre-trained channel compression model and output the compressed channel data.

In some embodiments, the apparatus may further include:
a configuration-information receiving module, configured to receive first resource configuration information transmitted by the transmitting terminal. The first resource configuration information may be configured to instruct the time-frequency resource required by the receiving terminal for transmission of the compressed channel data and the neighboring reference signal.

The first data transmitting module may be configured to directly map the compressed channel data and the neighboring reference signal onto the time-frequency resource based on the first resource configuration information.

In some embodiments, the neighboring reference signal may be set within a coherence bandwidth of the compressed channel data.

In some embodiments, the compressed channel data may be transmitted in a combined manner or in a non-combined manner. In a case where the compressed channel data are transmitted in the combined manner, the apparatus may further include:
a combination processing module, configured to perform data combination processing on the compressed channel data output by the channel compression model and obtain at least one compressed channel data combination. The first data transmitting module may be configured to directly map the at least one compressed channel data combination onto the time-frequency resource.

In some embodiments, the apparatus may further include:
a normalization manner receiving module, configured to receive a normalization manner transmitted by the transmitting terminal; and
a normalization processing module, configured to perform normalization processing on the compressed channel data based on the normalization manner and obtain the normalized compressed channel data.

The first data transmitting module may be configured to directly map the normalized compressed channel data onto the time-frequency resource.

In some embodiments, the apparatus may further include:
a second configuration-information receiving module, configured to receive second resource configuration information transmitted by the transmitting terminal; the second resource configuration information may be configured to instruct the time-frequency resource required by the receiving terminal for transmission of a normalization element; and
a normalization-element transmitting module, configured to map the normalization element used in the normalization processing onto the time-frequency resource based on the second resource configuration information, and transmit the normalization element to the transmitting terminal.

In some embodiments, the normalization manner may be maximum normalization.

In a case where the receiving terminal transmits the compressed channel data in the combined manner, the normalization element may be the maximum modulus in the at least one compressed channel data combination.

In some embodiments, the apparatus may further include:
a second indication receiving module, configured to receive second indication information transmitted by the transmitting terminal; and
a second data transmitting module, configured to quantize the compressed channel data output by the channel compression model based on the second indication information, map the quantized compressed channel data onto the time-frequency resource and transmit the quantized compressed channel data to the transmitting terminal.

Some embodiments of the present disclosure further provide an electronic device. The electronic device includes:
a processor; and
a memory, configured to store an executable instruction for the processor.

The processor is configured to read the executable instruction from the memory and execute the instruction to implement any one of the above channel data transmission methods.

Some embodiments of the present disclosure further provide a computer-readable storage medium storing a computer program. The computer program is configured to execute any one of the above channel data transmission methods.

Some embodiments of the present disclosure further provide a computer program product configured to execute any one of the above channel data transmission methods.

Some embodiments of the present disclosure further provide a computer program product including a computer instruction, and the computer instruction is configured to be executed by a processor to perform any one of the above channel data transmission methods.

Some embodiments of the present disclosure provide a technical solution for feeding back channel state information. In a case where a receiving terminal transmits channel data to a transmitting terminal, compressed channel data output by a channel compression model on the receiving terminal is directly mapped onto a time-frequency resource and then transmitted to the transmitting terminal, instead of first performing quantization processing and other operations before mapping onto the time-frequency resource. In this way, after the transmitting terminal receives the compressed channel data, there is no need for dequantization processing, resulting in reducing transmission overhead and simplifying processing flow of channel state information feedback at both the receiving terminal and the transmitting terminal.

### BRIEF DESCRIPTION OF THE DRAWINGS

The above and other features, advantages, and aspects of various embodiments of the present disclosure will become more apparent with reference to the accompanying drawings and detailed embodiments. Throughout the drawings, the same or similar reference numerals indicate the same or similar components. It should be understood that the drawings are only schematic, and components and elements are not necessarily drawn to scale.
FIG. 1 is a schematic flowchart of a channel data transmission method provided by some embodiments of the present disclosure.
FIG. 2 is a schematic flowchart of a channel data transmission method provided by some other embodiments of the present disclosure.
FIG. 3 is a schematic flowchart of a channel data transmission method provided by some other embodiments of the present disclosure.
FIG. 4 is a schematic flowchart for determining a time-frequency resource provided by some embodiments of the present disclosure.
FIG. 5 is a schematic flowchart of a channel data transmission method provided by some other embodiments of the present disclosure.
FIG. 6 is a schematic flowchart of a channel data transmission method provided by some other embodiments of the present disclosure.
FIG. 7 is a flowchart for feeding channel state information from a receiving terminal back to a transmitting terminal in the related art.
FIG. 8 is a schematic flowchart of a data transmission method provided by some other embodiments of the present disclosure.
FIG. 9 is a schematic flowchart of a channel data transmission method provided by some other embodiments of the present disclosure.
FIG. 10 is a schematic flowchart of a channel data transmission method provided by some other embodiments of the present disclosure.
FIG. 11 is a schematic view of resource mapping provided by some embodiments of the present disclosure.
FIG. 12 is a flowchart of resource mapping provided by some embodiments of the present disclosure.
FIG. 13 is a schematic flowchart of a specific implementation method provided by some embodiments of the present disclosure.
FIG. 14 is a structural schematic view of a channel data transmission apparatus provided by some embodiments of the present disclosure.
FIG. 15 is a structural schematic view of a channel data transmission apparatus provided by some other embodiments of the present disclosure.
FIG. 16 is a structural schematic view of an electronic device provided by some embodiments of the present disclosure.

### DETAILED DESCRIPTION OF THE PREFERRED EMBODIMENTS

Embodiments of the present disclosure will be described more fully below with reference to the accompanying drawings. Although certain embodiments of the present disclosure are shown in the accompanying drawings, it should be understood that the present disclosure may be implemented in various forms and shall not be construed as being limited to the embodiments set forth herein. Instead, these embodiments are provided for a more thorough and complete understanding of the present disclosure. It should be understood that the accompanying drawings and embodiments of the present disclosure herein are provided for illustrative purposes only and are not intended to limit the scope of protection of the present disclosure.

It should be understood that various operations described in the method embodiments of the present disclosure may be performed in different sequences and/or in parallel. Furthermore, the method embodiments may include additional operations and/or omit some of the illustrated operations. The scope of the present disclosure is not limited in this regard.

The term "including" and variants thereof as used herein are open-ended, meaning "including but not limited to". The term "based on" means "based at least in part on". The term "an embodiment" refers to "at least one embodiment"; the term "another embodiment" refers to "at least one further embodiment"; and the term "some embodiments" refers to "at least some embodiments". Relevant definitions of other relevant terms will be provided in the following description.

It is noted that the terms such as "first" and "second" and the like in the present disclosure are merely used to distinguish various apparatuses, modules, or units, rather than to define the execution sequence or interdependence of functions performed by such apparatuses, modules, or units.

It is also noted that the modifiers "a/an/one" and "a plurality of" used herein are illustrative rather than restrictive. Those skilled in the art will understand that such modifiers shall be interpreted as "one or more" unless the context clearly indicates otherwise.

In the related art, when channel state information (CSI) feedback is performed, compressed signal data output by a channel compression model is usually subjected to quantization, channel coding, scrambling, and other processes before transmission, resulting in high transmission overhead and complex processing procedures. To address these defects, some embodiments of the present disclosure provide a technical solution for feeding back CSI. In a case where a receiving terminal transmits channel data to a transmitting terminal, compressed channel data output by a channel compression model and transmitted by the receiving terminal is directly mapped onto a time-frequency resource and then transmitted to the transmitting terminal, instead of being mapped onto the time-frequency resource after being subjected to operations such as quantization. In this way, after receiving the compressed channel data, the transmitting terminal no longer needs to perform dequantization processing, resulting in not only reducing transmission overhead, but also simplifying processing procedures of CSI feedback at both the receiving terminal and the transmitting terminal. The technical solutions provided by the embodiments of the present disclosure involves improvements at both the receiving terminal and the transmitting terminal. The following embodiments will be explained respectively from the side of the transmitting terminal and the side of the receiving terminal.

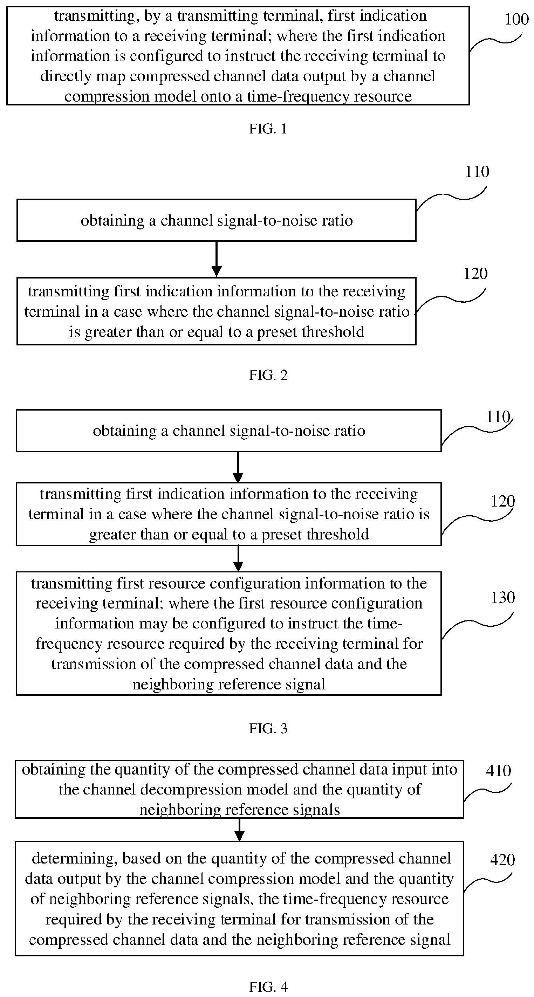

A channel data transmission method provided by some embodiments of the present disclosure is performed by a transmitting terminal, as shown in FIG. 1. FIG. 1 is a schematic flowchart of a channel data transmission method provided by some embodiments of the present disclosure. As shown in FIG. 1, the method may include the following operations.

At operation 100, a transmitting terminal transmits first indication information to a receiving terminal; the first indication information is configured to instruct the receiving terminal to directly map compressed channel data output by a channel compression model onto a time-frequency resource.

In some embodiments of the present disclosure, the transmitting terminal may be a network-side device (e.g., a base station). The receiving terminal may be a user terminal.

In some embodiments of the present disclosure, a radio access network Artificial Intelligence (AI) model training system may be adopted to pre-collect downlink channel data in advance and perform offline training on an AI autoencoder-based channel compression model and a channel decompression model. The AI model training system may be deployed on a Centralized Unit (CU) and/or a Distributed Unit (DU) of the transmitting terminal, or on a cross-CU logical entity. After the channel compression model and the channel decompression model are pre-trained, the channel compression model may be transmitted to the receiving terminal, and the channel decompression model may be deployed at the transmitting terminal.

At the operation 100, in a case where the transmitting terminal determines to transmit compressed channel data to the transmitting terminal by directly mapping the compressed channel data onto the time-frequency resource, the transmitting terminal may transmit corresponding first indication information to the receiving terminal, such that the receiving terminal may directly map the compressed channel data output by the pre-trained channel compression model onto the time-frequency resource. The compressed channel data are unquantized data without undergoing operations such as quantization, channel coding, scrambling, or the like. By utilizing the proposed technical solution, transmission overhead may be reduced, and processing procedures of CSI feedback at both the receiving terminal and the transmitting terminal may be simplified. The first indication information may be a value of a flag bit. For example, the value of the flag bit may be set to 1.

The determination of transmitting the compressed channel data to the transmitting terminal by directly mapping the compressed channel data onto the time-frequency resource may include various approaches. For example, the transmitting terminal may be preconfigured to adopt the above manner to perform the CSI feedback. In this case, after a radio link control layer connection is established between the transmitting terminal and the receiving terminal, the transmitting terminal may transmit the first indication information to the connected or accessed receiving terminal to instruct the receiving terminal to transmit the compressed channel data in the above manner.

In some embodiments, the first indication information may be further configured to instruct the receiving terminal to directly map a neighboring reference signal onto the time-frequency resource. The neighboring reference signal may serve as a pilot signal. A channel may be derived from the pilot signal, and the compressed channel data may be further obtained from the channel.

In other cases, the transmitting terminal may obtain an assessment quality during communication with the receiving terminal, and then determine, based on the assessment quality, whether to transmit the compressed channel data in the above manner. The assessment quality can reflect actual channel quality and an interference condition. Under these circumstances, a preset threshold may be set, and the compressed channel data may be directly mapped onto the time-frequency resource to transmit the compressed channel data to the transmitting terminal only when the channel assessment quality satisfies a first preset threshold. The channel assessment quality may include any one of a channel signal-to-noise ratio, a bit error rate, and a channel quality indicator. For example, the channel assessment quality may include the channel signal-to-noise ratio; and a large signal-to-noise ratio represents a good channel quality. Under these circumstances, the channel signal-to-noise ratio may be set to be greater than or equal to the preset threshold. In this case, the compressed channel data can be still better and reliably transmitted to the transmitting terminal even if the technical solution of the embodiments of the present disclosure is adopted, thereby reducing the failure to effectively transmit the compressed channel data to the transmitting terminal due to excessive noise and interference. In a case where the channel signal-to-noise ratio is less than a preset threshold, it indicates that the channel quality is poor. In this case, the compressed channel data output by the channel compression model may still undergo operations such as quantization, channel coding, scrambling, modulation, or the like. After that, resource mapping is performed to map the compressed channel data after the above series of processing onto the time-frequency resource. In a case where the channel assessment quality includes the bit error rate, the technical solution of some embodiments of the present disclosure may be adopted to transmit the first indication information to the receiving terminal when the bit error rate is less than or equal to a preset threshold. In a case where the channel assessment quality includes the channel quality indicator, the technical solution of some embodiments of the present disclosure may be adopted to transmit the first indication information to the receiving terminal, when the channel quality indicator is greater than or equal to the corresponding preset threshold.

A method flowchart for the above case may be as shown in FIG. 2. FIG. 2 is a schematic flowchart of a channel data transmission method provided by some other embodiments of the present disclosure. As shown in FIG. 2, taking the channel signal-to-noise ratio as an example, the method may include the following operations.

At operation 110, a channel signal-to-noise ratio is obtained.

In some embodiments, the operation 110 may include the following operations: a Sounding Reference Signal (SRS) transmitted by the receiving terminal may be first received. After obtaining the SRS, the transmitting terminal may calculate the channel signal-to-noise ratio based on the SRS.

At operation 120, first indication information is transmitted to the receiving terminal in a case where the channel signal-to-noise ratio is greater than or equal to a preset threshold.

At the operation 120, after calculating the channel signal-to-noise ratio, the transmitting terminal may determine a magnitude relationship between the channel signal-to-noise ratio and the preset threshold. In a case where the channel signal-to-noise ratio is greater than or equal to the preset threshold, the transmitting terminal may transmit the first indication information to the receiving terminal. Accordingly, under good channel quality, the compressed channel data may be mapped onto the time-frequency resource by the direct mapping manner described above, so as to achieve the channel state information feedback and ensure quality of information state feedback.

As described above, a channel compression model and a channel decompression model may be pre-trained on the transmitting terminal to obtain a pre-trained channel compression model and a pre-trained channel decompression model. The pre-trained channel compression model may be transmitted to the receiving terminal. In addition, for the channel compression model, a range of the output value of the channel compression model may be controlled by setting a proper activation function on the last layer thereof. For example, in a case where the tan function is adopted as the activation function, the output compressed channel data may fall within a value range of [-1, 1]. In a case where the channel compression model is not configured with the proper activation function, the output compressed channel data may fall outside the above value range, and then the compressed channel data needs to be normalized before being directly mapped onto the time-frequency resource. In some embodiments of the present disclosure, the transmitting terminal may obtain a normalization manner adopted by the receiving terminal to normalize the compressed channel data output by the channel compression model, and then transmit the normalization manner to the receiving terminal, such that the receiving terminal can perform normalization processing on the compressed channel data output by the channel compression model.

Through the above embodiments, the transmitting terminal may transmit the channel compression model, normalization manner, etc., to the receiving terminal. In this way, after receiving the first indication information, the receiving terminal may be able to feed back the channel state information to the transmitting terminal by directly mapping the compressed channel data output by the channel compression model onto the time-frequency resource. The compressed channel data may be normalized when required, and then is directly mapped onto the time-frequency resource, without performing operations such as quantization.

In addition, in some embodiments of the present disclosure, in order to enable the receiving terminal to obtain the channel data, the transmitting terminal may transmit a Channel State Information-Reference Signal (CSI-RS) to the receiving terminal, such that the receiving terminal may obtain, based on the CSI-RS, the channel data capable of reflecting downlink channel quality.

In order to smoothly implement direct mapping, by the receiving terminal, of the compressed channel data onto the time-frequency resource, it is necessary to allocate, at the transmitting terminal, the time-frequency resource for each connected / accessed receiving terminal. FIG. 3 is a schematic flowchart of a channel data transmission method provided by some other embodiments of the present disclosure. As shown in FIG. 3, in addition to operations 110 and 120 described above, the method may further include the following operations.

At operation 130, first resource configuration information may be transmitted to the receiving terminal. The first resource configuration information may be configured to instruct the time-frequency resource required by the receiving terminal for transmission of the compressed channel data and the neighboring reference signal.

The neighboring reference signal needs to be transmitted on the time-frequency resource together or simultaneously with the compressed channel data during the transmission of the compressed channel data by the receiving terminal. The transmitting terminal may estimate the channel based on the neighboring reference signal and then extract the compressed channel data from the estimated channel. At the operation 130, the transmitting terminal may configure the time-frequency resource to be used by the receiving terminal for transmission of the compressed channel data and the neighboring reference signal, and then transmit the time-frequency resource to the receiving terminal as the first resource configuration information.

The execution order of transmitting the first resource configuration information to the receiving terminal at the operation 130 and the operation 120 is not limited by some embodiments of the present disclosure. Either one of the operations may be performed first and followed by the other, or these operations may be performed simultaneously.

Before transmitting the first resource configuration information to the receiving terminal, the transmitting terminal needs to determine the time-frequency resource required by the receiving terminal to transmit the compressed channel data and the neighboring reference signal. FIG. 4 is a schematic flowchart of determining a time-frequency resource provided by some embodiments of the present disclosure. As shown in FIG. 4, the determining the time-frequency resource includes the following operation.

At operation 410, the quantity of the compressed channel data input into the channel decompression model and the quantity of neighboring reference signals are obtained.

In the above embodiments, since the channel compression model is pre-trained, the quantity of the compressed channel data input into the channel decompression model may be determined. The quantity of the compressed channel data input into the channel decompression model may be the same as the quantity of the compressed channel data output by the channel compression model. The quantity of neighboring reference signals may be set as required. In some embodiments, the neighboring reference signal may be set within a coherence bandwidth of the compressed channel data.

At operation 420, the time-frequency resource required by the receiving terminal for transmission of the compressed channel data and the neighboring reference signal may be determined based on the quantity of the compressed channel data output by the channel compression model and the quantity of neighboring reference signals.

In some embodiments of the present disclosure, for example, assume the quantity of the compressed channel data output by the compression model and the quantity of the compressed channel data input into the decompression model are denoted as N, in the non-combination manner, the time-frequency resource needs to be configured based on N pieces of compressed channel data. However, in some combination manners, the compressed channel data output by the channel compression model may be combined, with a plurality of pieces of compressed channel data combined into one compressed channel data combination. For example, in a pairwise combination: in a case where N is an even number, the quantity of the compressed channel data combinations is N/2; in a case where N is an odd number, the quantity of the compressed channel data combinations is N/2 + 1. Accordingly, for the pairwise combination, the quantity of the compressed channel data combinations is obtained by dividing the quantity of output compressed channel data by 2 and rounding up. Under these circumstances, the required time-frequency resource may be configured based on the result obtained by dividing the quantity of output compressed channel data by 2 and rounding up. Some embodiments of the present disclosure adopt the combination manner to combine several pieces of compressed channel data into one compressed channel data combination, such that the required time-frequency resource may be saved. For example, compared with the conventional manner where one piece of the compressed channel data needs to be transmitted per Resource Element (RE), the pairwise combination manner in some embodiments of the present disclosure may enable transmission of one compressed channel data combination (i.e., two pieces of compressed channel data) per RE. Similarly, after the quantity of neighboring reference signals to be transmitted is determined, the time-frequency resource required by the neighboring reference signal may also be determined. The time-frequency resource required by the neighboring reference signal and the time-frequency resource required by the compressed channel data may be adjacent to each other. The neighboring reference signal may be set within a coherence bandwidth of the compressed channel data, ensuring that both the neighboring reference signal and the compressed channel data may use the same channel, such that the channel where the compressed channel data are located can be derived based on the reference signal. In some embodiments of the present disclosure, the neighboring reference signal is defined such that, in a case where the neighboring reference signal and a compressed channel data combination are mapped onto a resource grid, the distance between the REs where the neighboring reference signal and the compressed channel data combination are located may be smaller or less than a preset threshold.

After the time-frequency resource allocated to each receiving terminal is determined in the operation 420, the first resource configuration information may be transmitted according to the embodiments shown in FIG. 3. Besides, in order to reduce resource conflicts, after the above time-frequency resource is allocated to a certain receiving terminal, the same time-frequency resource will not be allocated to another receiving terminal.

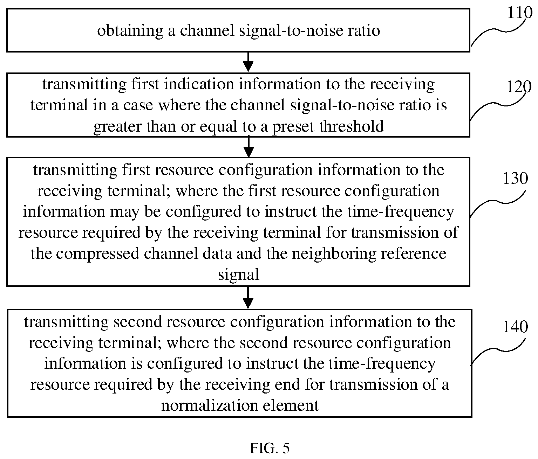

FIG. 5 is a schematic flowchart of a channel data transmission method provided by some other embodiments of the present disclosure. In addition to the operations shown in FIG. 3, the method shown in FIG. 5 may further include the following operations.

At operation 140, second resource configuration information may be transmitted to the receiving terminal; the second resource configuration information is configured to instruct the time-frequency resource required by the receiving terminal for transmission of a normalization element. The normalization element may be a parameter used by the receiving terminal during the normalization of the compressed channel data output by the channel compression model. After performing the normalization processing, the receiving terminal needs to feed back the normalization element to the transmitting terminal, such that the transmitting terminal may perform reconstruction or recovery based on the normalization element, and obtain the compressed channel data before the normalization, i.e., the transmitting terminal may recover the compressed channel data with the normalization element to obtain, at the transmitting terminal, unnormalized compressed channel data.

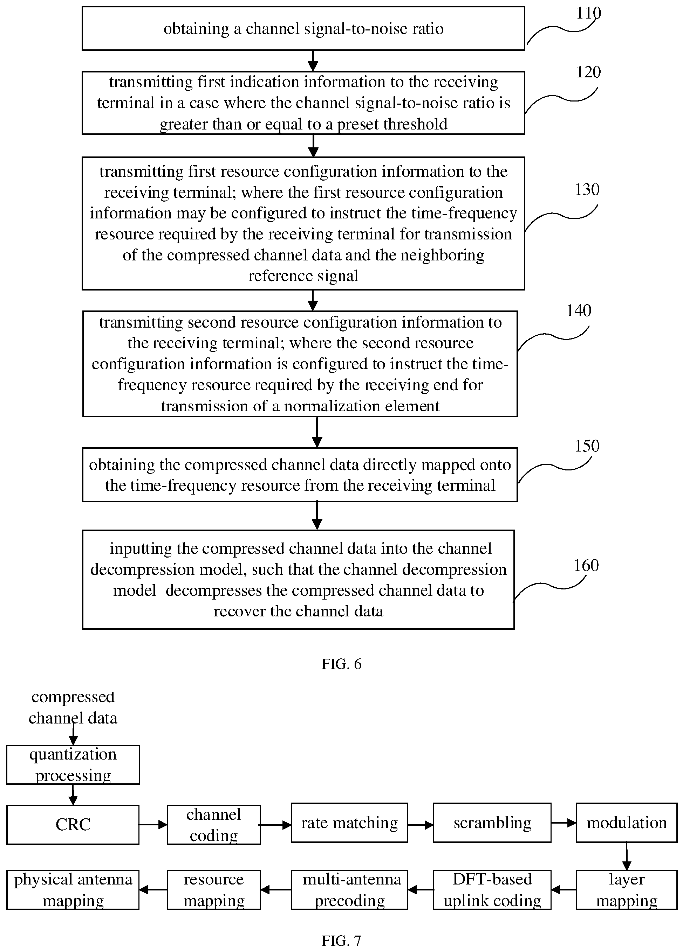

In some embodiments, after the transmitting terminal transmits the pre-trained channel compression model, the normalization manner, the first resource configuration information, and the second resource configuration information to the receiving terminal, the receiving terminal may input the channel data into the pre-trained channel compression model and compress the channel data through the pre-trained compression model to obtain the compressed channel data. The receiving terminal may further directly map the compressed channel data onto the time-frequency resource indicated by the first resource configuration information and further transmit the mapped compressed channel data to the transmitting terminal. FIG. 6 is a schematic flowchart of a channel data transmission method provided by some other embodiments of the present disclosure. In addition to the operations shown in FIG. 3, the method shown in FIG. 6 may further include the following operations.

At operation 150, the compressed channel data directly mapped onto the time-frequency resource from the receiving terminal may be obtained.

In some embodiments, the time-frequency resource may be configured by the transmitting terminal for the receiving terminal and indicated by the first resource configuration information. At the operation 150, the compressed channel data may be obtained via or based on the time-frequency resource.

At operation 160, the compressed channel data may be input into the channel decompression model, such that the channel decompression model may decompress the compressed channel data to recover the channel data.

The channel decompression model used in this operation may be a pre-trained channel decompression model which is configured correspondingly to (i.e., paired with) the channel compression model deployed at the receiving terminal. The channel decompression model may decompress the compressed channel data output by the channel decompression model to obtain original channel data, thereby feeding back the channel data obtained from the receiving terminal to the transmitting terminal and realizing the feedback of the channel state information.

At the operation 150, obtaining the compressed channel data output by the channel compression model and transmitted by the receiving terminal may be implemented as follows: first obtaining the neighboring reference signal directly mapped on the time-frequency resource, and deriving the channel based on the neighboring reference signal. Since the neighboring reference signal falls within the coherence bandwidth of the compressed channel data, it is possible to ensure that the neighboring reference signal and the compressed channel data share a same channel. After the channel is derived, the compressed channel data output by the channel compression model can be conveniently obtained from the derived channel.

As previously described in the above embodiments, the receiving terminal may also perform the normalization processing on the compressed channel data output by the channel decompression model, such that the compressed channel data obtained at the transmitting terminal is actually compressed channel data after normalization process, i.e., normalized compressed channel data. In this case, the receiving terminal may further transmit a corresponding normalization element used in the normalization process to the transmitting terminal through the time-frequency resource indicated by the second resource configuration information. Therefore, the transmitting terminal may receive the normalization element obtained by the receiving terminal during normalization of the compressed channel data. The obtaining the compressed channel data output by the channel compression model and transmitted by the receiving terminal based on the derived channel may include: obtaining the compressed channel data output by the channel compression model and transmitted by the receiving terminal based on the derived channel and the normalization element. The normalization element is used to recover or restore the normalized compressed channel data to compressed channel data before normalization. The compressed channel data before normalization is then input into the channel decompression model to obtain the original channel data.

The above embodiments mainly provide a technical solution executed after the channel assessment quality is obtained and when the channel assessment quality satisfies a first preset threshold. In the technical solution, the compressed channel data output by the channel compression model is directly mapped onto the time-frequency resource and then transmitted to the transmitting terminal without quantization and other processing. During communication between the receiving terminal and the transmitting terminal, the transmitting terminal may periodically reobtain the channel assessment quality at a certain time interval. In a case where the channel quality still satisfies the first threshold, the above technical solution will still be executed. In a case where the channel assessment quality satisfies a second preset threshold, the transmitting terminal may transmit second indication information to the receiving terminal; the second indication information may be configured to instruct the receiving terminal to quantize the compressed channel data output by the channel compression model and map the quantized compressed channel data onto a time-frequency resource. In some embodiments, the channel assessment quality may include a channel signal-to-noise ratio, a bit error rate, and a channel quality indicator. The channel assessment quality satisfying a second preset threshold may include the signal-to-noise ratio being less than a preset threshold, the bit error rate being greater than a preset threshold, or the channel quality indicator being less than a preset threshold. In this case, it indicates that the channel quality is relatively poor, and channel information feedback may be performed by quantizing the compressed channel data output by the channel compression model and then mapping the quantized onto the time-frequency resource.

In this case, when the receiving terminal transmits the compressed channel data, the corresponding operations may be shown in FIG. 7. FIG. 7 is a flowchart of feeding channel state information from a receiving terminal back to a transmitting terminal in the related art. As shown in FIG. 7, in addition to the quantization processing of the compressed channel data, Cyclic Redundancy Check (CRC), channel coding, rate matching, Hybrid Automatic Repeat reQuest (HARQ) coding, scrambling, modulation, layer mapping, Discrete Fourier Transform (DFT)-based uplink coding, multi-antenna precoding, resource mapping, physical antenna mapping, and other operations may be required to be performed. However, in the technical solution provided by some embodiments of the present disclosure, in a case where the channel signal-to-noise ratio is greater than or equal to the preset threshold, the unquantized compressed channel data are directly mapped onto the designated time-frequency resource. Compared with the technical solution provided by some embodiments of the present disclosure, the operations shown in FIG. 7 obviously require excessive processing operations, resulting in increasing operational difficulty, and causing significant transmission overhead. The technical solution provided by some embodiments of the present disclosure for the case where the channel signal-to-noise ratio is greater than or equal to the preset threshold can obviously overcome the above-mentioned drawbacks effectively.

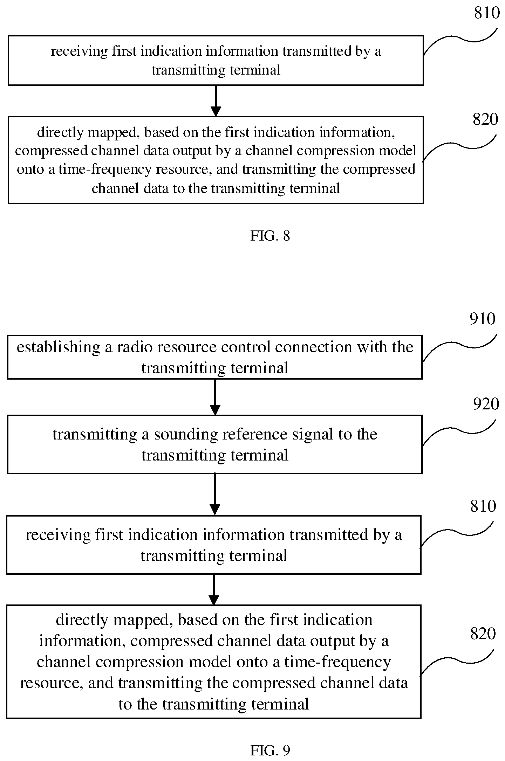

Corresponding to the data transmission method performed by the transmitting terminal above, the following embodiments describe a data transmission method performed by the receiving terminal. FIG. 8 is a schematic flowchart of a data transmission method provided by some other embodiments of the present disclosure. As shown in FIG. 8, the method may include the following operations.

At operation 810, first indication information transmitted by a transmitting terminal is received.

As described in the above embodiments, the first indication information is transmitted by the transmitting terminal to the receiving terminal in a case where the transmitting terminal is determined to transmit the compressed channel data by directly mapping the compressed channel data onto a time-frequency resource. After receiving the first indication information, the receiving terminal may confirm that current channel state information feedback in a communication system is implemented by directly mapping the compressed channel data onto the time-frequency resource. The first indication information may be a value of a flag bit. For example, the value of the flag bit may be set to 1.

At operation 820, compressed channel data output by a channel compression model is directly mapped onto a time-frequency resource based on the first indication information, and the compressed channel data are transmitted to the transmitting terminal.

In some embodiments, at the operation 820, after the receiving terminal performs downlink channel measurement and obtains the channel data, the channel data is compressed through the channel compression model to obtain the compressed channel data. The transmitting terminal may transmit Channel State Information-Reference Signal (CSI-RS) in the downlink channel, and the receiving terminal may obtain the channel data representing the quality of the downlink channel based on CSI-RS. Since the compressed channel data output by the pre-trained channel compression model mentioned above is directly mapped onto the time-frequency resource, the compressed channel data has not undergone operations such as quantization, channel coding, scrambling, or the like, and is unquantized data. The technical solution provided by some embodiments of the present disclosure can reduce transmission overhead and simplify processing procedures at both the receiving terminal and the transmitting terminal during the channel state information feedback.

Furthermore, since the channel compression model is a pre-trained model, and the pre-training process is usually implemented at a Central Unit (CU), a Distributed Unit (DU) of the transmitting terminal or a cross-CU logical entity, some embodiments of the present disclosure need to receive the pre-trained compression model transmitted by the transmitting terminal in advance, and compress the channel data based on the pre-trained channel compression model and output the compressed channel data.

In some embodiments, the first indication message is further configured to instruct the receiving terminal to directly map a neighboring reference signal onto the time-frequency resource. The neighboring reference signal may be used as a pilot symbol, a channel may be derived via the neighboring reference signal, and then the compressed channel data may be extracted based on the derived channel. In this case, the directly mapping the compressed channel data output by the channel compression model onto the time-frequency resource based on the first indication information may include: directly mapping the compressed channel data output by the channel compression model and the neighboring reference signal onto the time-frequency resource based on the first indication information. FIG. 9 is a schematic flowchart of a channel data transmission method provided by some other embodiments of the present disclosure. As shown in FIG. 9, in addition to the operations 810 and 820 mentioned above, before executing the operation 810, the method may further include the following operations.

At operation 910, a Radio Resource Control (RRC) connection (RRC-CONNECTED) may be established with the transmitting terminal; after the RRC-CONNECTED is established, the receiving terminal may access a communication network.

At operation 920, a Sounding Reference Signal (SRS) may be transmitted to the transmitting terminal, such that the transmitting terminal may calculate the channel signal-to-noise ratio based on the SRS. In some embodiments, as described in embodiments shown in FIG. 2 above, the transmitting terminal may transmit the first indication information to the receiving terminal in a case where the channel signal-to-noise ratio is greater than or equal to a first preset threshold.

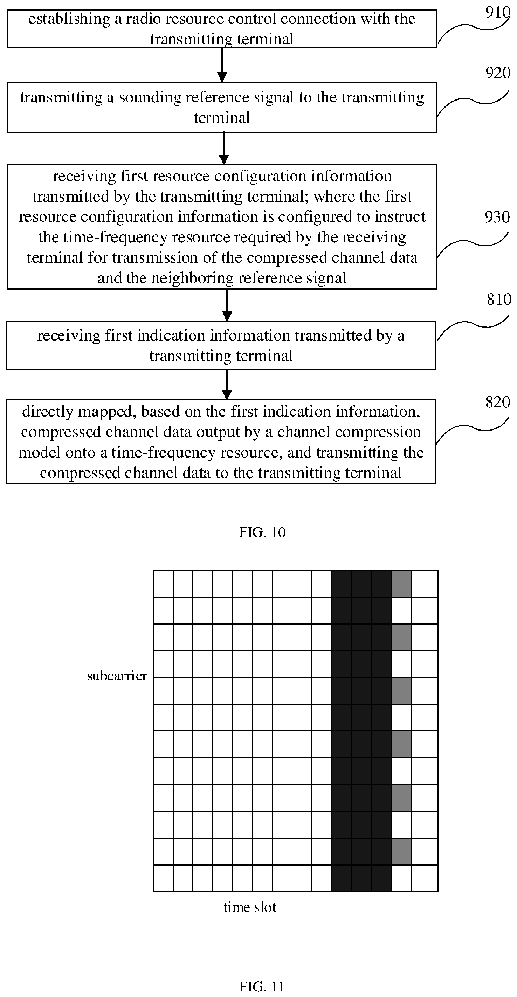

The time-frequency resource used by the receiving terminal to transmit the compressed channel data and the neighboring reference signal may be preconfigured by the transmitting terminal. Therefore, in a case where a plurality of receiving terminals access the transmitting terminal, the time-frequency resources used by different receiving terminals can still be different from each other. In some embodiments, as shown in FIG. 10, the method may further include the following operations.

At operation 930, first resource configuration information transmitted by the transmitting terminal may be received. The first resource configuration information may be configured to instruct the time-frequency resource required by the receiving terminal for transmission of the compressed channel data and the neighboring reference signal.

In this case, at the operation 820, the directly mapping the compressed channel data output by the channel compression model onto the time-frequency resource may include: directly mapping the compressed channel data and the neighboring reference signal onto the time-frequency resource based on the first resource configuration information.

As described in the embodiments above, the receiving terminal may transmit the compressed channel data in a combined manner or in a non-combined manner. For example, in a case where the quantity of the compressed channel data output by the channel compression model is denoted as N, in the non-combination manner, the time-frequency resource needs to be configured based on N pieces of compressed channel data. However, in some combination manners, the compressed channel data output by the channel compression model may be combined, with a plurality of pieces of compressed channel data combined into one compressed channel data combination. For example, in a pairwise combination: in a case where N is an even number, the quantity of the compressed channel data combinations is N/2; in a case where N is an odd number, the quantity of the compressed channel data combinations is N/2 + 1. Accordingly, for the pairwise combination, the quantity of the compressed channel data combinations is obtained by dividing the quantity of output compressed channel data by 2 and rounding up. Under these circumstances, the required time-frequency resource may be configured based on the result obtained by dividing the quantity of output compressed channel data by 2 and rounding up. Some embodiments of the present disclosure adopt the combination manner to combine several pieces of compressed channel data into one compressed channel data combination, such that the required time-frequency resource may be saved. For example, compared with the original manner where one piece of compressed channel data needs to be transmitted per resource element (RE), the pairwise combination in some embodiments of the present disclosure may enable transmission of one compressed channel data combination (i.e., two pieces of compressed channel data) per RE. Similarly, after the quantity of neighboring reference signals to be transmitted is determined, the time-frequency resource required by the neighboring reference signal may also be determined. The time-frequency resource required by the neighboring reference signal and the time-frequency resource required by the compressed channel data may be adjacent to each other. The neighboring reference signal may be set within a coherence bandwidth of the compressed channel data, ensuring that both the neighboring reference signal and the compressed channel data may share the same channel, such that the channel where the compressed channel data are located can be derived based on the reference signal. In some embodiments of the present disclosure, the neighboring reference signal is defined such that, in a case where the neighboring reference signal and a compressed channel data combination are mapped onto a resource grid, the distance between the REs where the neighboring reference signal and the compressed channel data combination are located may be smaller or less than a preset threshold.

In some embodiments of the present disclosure, in a case where the compressed channel data are transmitted in the combined manner, during combination of at least two compressed channel data into one compressed channel data combination, the method performed by the receiving terminal may further include: performing data combination processing on the compressed channel data output by the channel compression model and obtaining at least one compressed channel data combination.

Moreover, in the above embodiments, the directly mapping the compressed channel data output by the channel compression model to the time-frequency resource may be achieved by directly mapping the at least one compressed channel data combination onto the time-frequency resource.

**In** some embodiments of the present disclosure, for the channel compression model, a range of the output value of the channel compression model may be controlled by setting an appropriate activation function on the last layer thereof. For example, in a case where the tan function is adopted as the activation function, the output compressed channel data may fall within the value range of [-1, 1]. In a case where the channel compression model is not configured with the proper activation function, the output compressed channel data may fall outside the above value range, and then the compressed channel data needs to be normalized before being directly mapped onto the time-frequency resource. The normalization manner may be determined generally by the transmitting terminal. After determining the normalization manner, the transmitting terminal may transmit the normalization manner to the receiving terminal. Accordingly, in the operations mentioned above, the method performed by the receiving terminal may further include: receiving a normalization manner transmitted by the transmitting terminal; and performing normalization processing on the compressed channel data based on the normalization manner and obtaining normalized compressed channel data.

The directly mapping the compressed channel data output by the channel compression model onto the time-frequency resource may include: directly mapping the normalized compressed channel data onto the time-frequency resource.

The normalization element may be adopted or utilized during normalization of the compressed channel data mentioned above. The transmitting terminal needs to use the normalization element to restore or recover the normalized compressed channel data and to obtain the compressed channel data before normalization, i.e., the compressed channel data output by the channel compression model. **In** some embodiments, the transmitting terminal will configure the time-frequency resource for transmission of the normalization element and transmit the time-frequency resource to the receiving terminal. Accordingly, the method performed by the receiving terminal may further include: receiving second resource configuration information transmitted by the receiving terminal, where the second resource configuration information is configured to instruct time-frequency resource required by the receiving terminal for transmission of a normalization element; and mapping the normalization element used in the normalization processing onto the time-frequency resource based on the second resource configuration information, and transmitting the normalization element to the transmitting terminal.

In some embodiments of the present disclosure, the compressed channel data may be combined pairwise and normalized. In some embodiments, for example, the channel data is compressed by the channel compression model, and the output compressed channel data are [*o*₁(*t*),*o*₂(*t*),L ,*o_{N}*(*t*)], where *oᵢ*(*t*) is a real number. The compressed channel data are combined pairwise to obtain a compressed channel data combination of [(*o*₁(*t*)+*o*₂(*t*)*j*),(*o*₃(*t*)+*o*₄(*t*)*j*),L]. In a case where N is an even number, the last compressed channel data combination is (*o*_{*N*-1}(*t*)+*o_{N}*(*t*)*j*)*.* In a case where N is an odd number, the last compressed channel data combination is (*o_{N}*(*t*)). In a case where the normalization is required, the compressed channel data combination (*o*₁(*t*)*+o*₂(*t*)*j*),(*o*₃(*t*)+*o*₄(*t*)*j*),L obtained by pairwise combination is normalized to obtain the normalized compressed channel data combination Norm(*o*₁(*t*)+*o*₂(*t*)*j*),Norm(*o*₃(*t*)*+o*₄(*t*)*j*),L. The normalized compressed channel data combination and the neighboring reference signal may be reported based on the time-frequency resource configured by the transmitting terminal. Since the neighboring reference signal falls within the coherence bandwidth of the compressed channel data, it is possible to ensure that the neighboring reference signal and the compressed channel data share a same channel. In a case where the channel derived from the neighboring reference signal is H(t), the compressed channel data combination transmitted on the same channel is [*H*(*Norm*(*o*₁(*t*)+*o*₂(*t*)*j*)),H(*Norm*(*o*₃(*t*)+*o*₄(*t*)*j*)),L].

In some embodiments of the present disclosure, the normalization may be performed to normalize the compressed channel data to a reasonable numerical range. The normalization may adopt or select a maximum normalization method as follows.

For the compressed channel data [*o*₁(*t*),*o*₂(*t*),L ,*o_{N}*(*t*)] output by the channel compression model, the maximum modulus or maximum amplitude $O \left(t\right) = \left⌈max\left(\sqrt{{o}_{i}^{2} \left(t\right) + {o}_{i + 1}^{2} \left(t\right)}\right)\right⌉$ in (*oᵢ*(*t*)+*o*_{*i*+1}(*t*))(*i*=1,3,5L) may be calculated, where ┌ ┐ represents rounding up. The compressed channel data combination combined pairwise may be divided by *O*(*t*), and the normalized compressed channel data combination $\left[\left(\frac{{o}_{1} \left(t\right) + {o}_{2} \left(t\right) j}{O \left(t\right)}\right), \left(\frac{{o}_{3} \left(t\right) + {o}_{4} \left(t\right) j}{O \left(t\right)}\right), L\right]$ may be obtained. The maximum modulus *O*(*t*) may serve as the normalization element. The normalization element may be transmitted to the transmitting terminal by the time-frequency resource designated by the transmitting terminal, such that the transmitting terminal may be able to restore or recover the compressed channel data combination before normalization through or by utilizing the normalization element.

FIG. 11 is a schematic view of resource mapping provided by some embodiments of the present disclosure. As shown in FIG. 11, FIG. 11 illustrates a schematic view of resource mapping of the compressed channel data combination and the neighboring reference signal in some embodiments of the present disclosure. Assuming that the neighboring reference signal transmitted by the receiving terminal at a time t is x(t), the neighboring reference signal received by the transmitting terminal is X(t), and the channel H(t) may be calculated by using x(t) and X(t). Due to the coherence of the channel within a sub-band, a channel at a black position in FIG. 10 may be regarded as identical to a channel of the neighboring reference signal at a closest or nearest diagonal-line position. Therefore, as shown in FIG. 10, the normalized compressed channel data combination $\left[\left(\frac{{o}_{1} \left(t\right) + {o}_{2} \left(t\right) j}{O \left(t\right)}\right), \left(\frac{{o}_{3} \left(t\right) + {o}_{4} \left(t\right) j}{O \left(t\right)}\right), L\right]$ is inserted into a resource block at the black position, and the neighboring reference signal is inserted into the resource block at the diagonal-line position. In a case where a plurality of neighboring reference signals exist, either an average channel corresponding to the plurality of neighboring reference signals or any one of the plurality of neighboring reference signals may be selected. Assuming that the channel is H(t) and a signal S(t) is received on the configured neighboring feedback time-frequency resource, the transmitted signal may be estimated as S(t)/H(t).

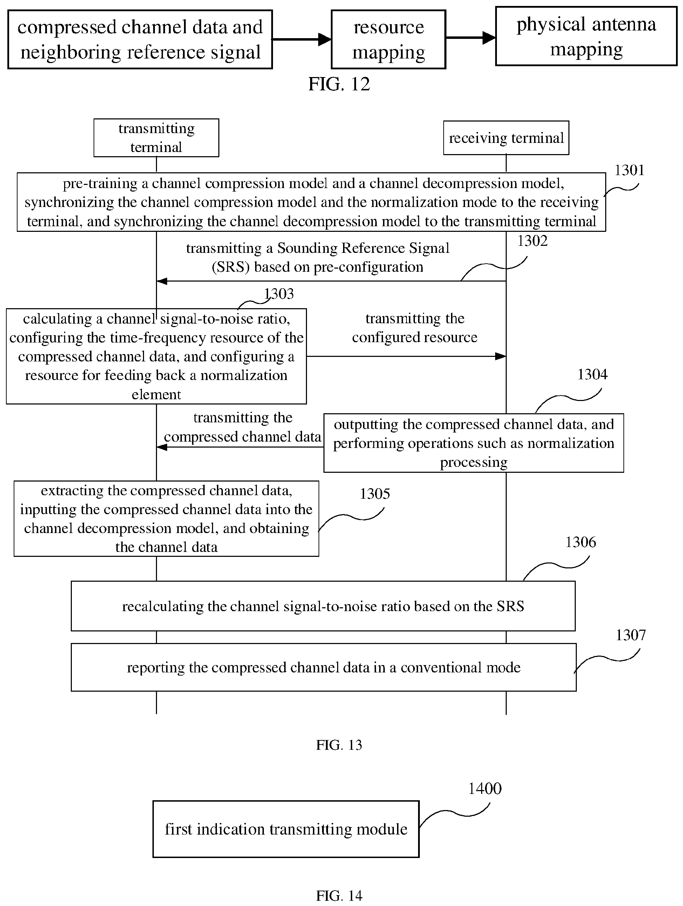

FIG. 12 is a flowchart of resource mapping provided by some embodiments of the present disclosure. As shown in FIG. 12, the compressed channel data and the neighboring reference signal may be processed by adopting a direct resource mapping solution. The compressed channel data and the neighboring reference signal may be directly mapped onto the time-frequency resource designated by the transmitting terminal, and then transmitted to the transmitting terminal after physical antenna mapping. The processing solution differs from the solution shown in FIG. 7. As shown in FIG. 7, the compressed channel data needs to be first subjected to quantization processing, and then subjected to a series of operations such as Cyclic Redundancy Check (CRC), channel coding, rate matching, Hybrid Automatic Repeat request (HARQ) coding, scrambling, modulation, layer mapping, Discrete Fourier Transform (DFT)-based uplink precoding, multi-antenna precoding, or the like are performed. After that, the resource mapping is performed.

In some embodiments of the present disclosure, the technical solution is implemented after obtaining the channel signal-to-noise ratio and in a case where the channel signal-to-noise ratio is greater than or equal to a preset threshold. In the technical solution, the compressed channel data output by the channel compression model is directly mapped onto the time-frequency resource and then transmitted to the transmitting terminal, avoiding operations such as quantization. During communication between the receiving terminal and the transmitting terminal, the transmitting terminal may periodically reobtain the channel signal-to-noise ratio at a certain time interval. In a case where the channel signal-to-noise ratio remains greater than or equal to the preset threshold, the above solution continues to be executed. In a case where the channel signal-to-noise ratio is less than the preset threshold, the transmitting terminal may transmit second indication information to the receiving terminal. Accordingly, the method performed by the receiving terminal may further include: receiving second indication information transmitted by the transmitting terminal; and quantizing the compressed channel data output by the channel compression model based on the second indication information, mapping quantized compressed channel data onto the time-frequency resource, and transmitting the quantized compressed channel data to the transmitting terminal. In this case, the receiving terminal executes the operations shown in FIG. 7 for transmission of the compressed channel data.

FIG. 13 is a schematic flowchart of a specific implementation method provided by some embodiments of the present disclosure. As shown in FIG. 13, the method includes the following operations.

At operation 1301, an AI model training system for the radio access network may be deployed on the transmitting terminal. The AI model training system may be deployed at a Central Unit (CU) and/or a Distributed Unit (DU) of the transmitting terminal, or on a cross-CU logical entity. During the pre-training, downlink channel data may be pre-collected in advance, and an AI autoencoder-based channel compression model (denoted as E) and a corresponding channel decompression model (denoted as *D*) are offline trained. After the pre-training is completed, the pre-trained channel compression model and the normalization manner may be synchronized to the receiving terminal, where the normalization manner may be a maximum normalization manner. In addition, the channel decompression model, the maximum normalization manner, and the quantity (24) of the compressed channel data output by the channel compression model may be synchronized to the transmitting terminal. The quantity of the compressed channel data output by the channel compression model may be equal to the quantity of the compressed channel data input into the channel decompression model. For example, the transmitting terminal may preset a channel signal-to-noise ratio threshold to *δ*=20*dB* based on the precision requirement of user channel feedback.

At operation 1302, the receiving terminal may access a network, enter an RRC-CONNECTED state, and transmit a Sounding Reference Signal (SRS) based on a pre-configuration.

At operation 1303, the transmitting terminal may transmit a Channel State Information-Reference Signal (CSI-RS) based on the pre-configuration, calculate a Signal-to-Interference-plus-Noise Ratio (SINR) of an uplink channel based on the received SRS, and compare the calculated SINR with the preset channel signal-to-noise ratio threshold. In a case where the measured SINR is greater than or equal to the preset channel signal-to-noise ratio threshold (e.g., the measured SINR is greater than or equal to 20), the transmitting terminal may transmit a flag bit 1, and the flag bit 1 may serve as the first indication information.

Further, the transmitting terminal may configure or allocate the time-frequency resource based on: 12, which is obtained by dividing 24, the quantity of pieces of the compressed channel data input into the channel decompression model, by 2 and rounding up, and based on 3, the quantity of neighboring reference signals required to be configured. The time-frequency resource may be configured for the receiving terminal to feed back the compressed channel data output by the channel compression model and the neighboring reference signals. The transmitting terminal will no longer allocate the allocated time-frequency resource mentioned above to another user/antenna. In addition, the transmitting terminal also needs to configure a feedback resource for the receiving terminal to feed back the normalization element. In a case where the maximum normalization manner is adopted, the normalization element takes the binary format of the maximum modulus. The binary format of the maximum modulus may be fed back in the manner shown in FIG. 13, requiring a series of operations such as modulation, layer mapping, DFT-based uplink coding, multi-antenna precoding, resource mapping, and physical antenna mapping before being transmitted to the transmitting terminal. The transmitting terminal may also transmit the configured feedback resource information to the receiving terminal, and perform the operation 1304.

In a case where the channel signal-to-noise ratio is less than the preset channel signal-to-noise ratio threshold *δ*, the transmitting terminal may transmit a flag bit 0. The flag bit 0 may serve as the second indication information and be configured to instruct the receiving terminal to feed back the compressed channel data in the manner shown in FIG. 6. In this case, the feedback resources may be configured based on the quantity of the compressed channel data input in the decompression model. The transmitting terminal may transmit the feedback resource configuration information to the receiving terminal, and then perform the operation 107.

At operation 1304, after receiving the flag bit 1, the receiving terminal may input channel data into the channel compression model at a time t to complete compression of the channel data. The receiving terminal may output compressed channel data [*o*₁(*t*),*o*₂(*t*),L ,*o*₂₄(*t*)], where *oᵢ*(*t*) is a real number. The receiving terminal may further obtain the compressed channel data combination *Y*(*t*)=[(*o*₁(*t*)+*o*₂(*t*)*j*),(*o*₃(*t*)+*o*₄(*t*)*j*),L (*o*₂₃(*t*)+*o*₂₄(*t*)*j*)] by combining the output compressed channel data pairwise. The maximum modulus or maximum amplitude $O \left(t\right) = \left⌈max\left(\sqrt{{o}_{i}^{2} \left(t\right) + {o}_{i + 1}^{2} \left(t\right)}\right)\right⌉$ in (*oᵢ*(*t*)+*o*_{*i*+1}(*t*)*j*)(*i*=1,3,5,L 23) may be calculated. The normalized compressed channel data combination $Y ′ \left(t\right) = \left[\left(\frac{{o}_{1} \left(t\right) + {o}_{2} \left(t\right) j}{O \left(t\right)}\right),\left(\frac{{o}_{3} \left(t\right) + {o}_{4} \left(t\right) j}{O \left(t\right)}\right),L \left(\frac{{o}_{23} \left(t\right) + {o}_{24} \left(t\right) j}{O \left(t\right)}\right)\right]$ may be obtained by dividing Y(t) by *O*(*t*). The normalized compressed channel data combination and the neighboring reference signal may be reported based on the time-frequency resource configured by the transmitting terminal, and the binary form of the maximum modulus *O*(*t*) may be fed back by adopting the feedback resources configured by the transmitting terminal.

At operation 1305, the transmitting terminal may derive the channel H(t) based on the received neighboring reference signal, recover the compressed channel data [*o*₁'(*t*),*o*₂'(*t*),L ,*o*₂₄'(*t*)] based on the channel H(t), the binary format of the received maximum modulus *O*(*t*), and $H \left[\left(\frac{{o}_{1}^{′} \left(t\right) + {o}_{2}^{′} \left(t\right) j}{O \left(t\right)}\right),H\left(\frac{{o}_{3}^{′} \left(t\right) + {o}_{4}^{′} \left(t\right) j}{O \left(t\right)}\right),L H\left(\frac{{o}_{23}^{′} \left(t\right) + {o}_{24}^{′} \left(t\right) j}{O \left(t\right)}\right)\right]$, and further recover the required channel data by inputting the compressed channel data into the channel decompression model.

At operation 1306, the transmitting terminal may recalculate a channel signal-to-noise ratio based on SRS and compare the calculated channel signal-to-noise ratio with the preset threshold. In a case where a magnitude relationship between the channel signal-to-noise ratio and the preset threshold changes, the transmitting terminal may adjust a flag bit transmitted to the receiving terminal, adjust feedback resources configured for the receiving terminal, and further feed back the reconfigured resources to the receiving terminal. Compressed channel data generated at the receiving terminal may be fed back to the transmitting terminal based on the time-frequency resource adjusted by the transmitting terminal. In a case where the channel signal-to-noise ratio is greater than or equal to the preset threshold, a flag bit 1 may be transmitted to the receiving terminal, and the corresponding operations may still refer to the operations 1303 to 1306. In a case where the channel signal-to-noise ratio is smaller than the preset threshold, a flag bit 0 may be transmitted to the receiving terminal, and subsequent processing operations may refer to the operation 107.

At operation 1307, after receiving the flag bit 0, the receiving terminal may compress channel data through the channel compression model, output the compressed channel data, and report the compressed channel data to the transmitting terminal in a conventional manner shown in FIG. 7. After receiving the compressed channel data transmitted by the receiving terminal, the transmitting terminal may input the compressed channel data into the channel decompression model for decompression, such that the channel data may be recovered and obtained. Then the operation 1306 may be performed.

Corresponding to the above method embodiments, some embodiments of the present disclosure further provide corresponding apparatuses configured to execute the methods described in the above embodiments and achieve identical technical effects.

Some embodiments of the present disclosure further provide a channel data transmission apparatus applied to or configured in a transmitting terminal. FIG. 14 is a structural schematic view of a channel data transmission apparatus provided by some embodiments of the present disclosure. As shown in FIG. 14, the apparatus may include a first indication transmitting module 1400.

The first indication transmitting module 1400 is configured to transmit first indication information to a receiving terminal. The first indication information is configured to instruct the receiving terminal to directly map compressed channel data output by a channel compression model onto a time-frequency resource.

In some embodiments, before the first indication information is transmitted to the receiving terminal, the apparatus may further include a first channel quality acquisition module.

The first channel quality acquisition module may be configured to obtain channel assessment quality before the first indication information is transmitted to the receiving terminal.

In some embodiments, the first indication transmitting module may be configured to transmit the first indication information to the receiving terminal in a case where the channel assessment quality satisfies a first preset threshold.

In some embodiments, the channel assessment quality includes any one of a channel signal-to-noise ratio, a bit error rate and a channel quality indicator. In a case where the channel assessment quality includes the channel signal-to-noise ratio, the first channel quality acquisition module may be configured to receive a sounding reference signal transmitted by the receiving terminal and calculate the channel signal-to-noise ratio based on the sounding reference signal.

In some embodiments, the apparatus may further include a first acquisition module, and a first transmitting module.

The first acquisition module may be configured to obtain a pre-trained channel compression model, a pre-trained channel decompression model, and the quantity of the compressed channel data input into the channel decompression model.

The first transmitting module may be configured to transmit the pre-trained channel compression model to the receiving terminal.

In some embodiments, the apparatus may further include a normalization-manner acquisition module.

The normalization-manner acquisition module may be configured to obtain a normalization manner adopted by the receiving terminal to perform normalization processing on compressed channel data output by the channel compression model.

The first transmitting module may be further configured to transmit the normalization manner to the receiving terminal.

In some embodiments, the apparatus may further include a configuration transmitting module.

The configuration transmitting module may be configured to transmit first resource configuration information to the receiving terminal. The first resource configuration information may be configured to instruct the time-frequency resource required by the receiving terminal for transmission of the compressed channel data and the neighboring reference signal.

In some embodiments, the neighboring reference signal may be set within a coherence bandwidth of the compressed channel data.

In some embodiments, the apparatus may further include a quantity acquisition module and a resource determination module.

The quantity acquisition module may be configured to obtain, before the first resource configuration information is transmitted to the receiving terminal, the quantity of the compressed channel data input into the channel decompression model and the quantity of neighboring reference signals.

The resource determination module may be configured to determine, based on the quantity of the compressed channel data input into the channel decompression model and the quantity of neighboring reference signals, the time-frequency resource required by the receiving terminal for transmission of the compressed channel data and the neighboring reference signal.

In some embodiments, the receiving terminal may be configured to transmit the compressed channel data in a combined manner or a non-combined manner.

In some embodiments, the configuration transmitting module may be further configured to transmit second resource configuration information to the receiving terminal. The second resource configuration information may be configured to instruct the time-frequency resource required by the receiving terminal for transmission of a normalization element.

In some embodiments, the apparatus may further include a channel-data acquisition module and a decompression module.

The channel-data acquisition module may be configured to obtain the compressed channel data output by the channel compression model and transmitted by the receiving terminal.

The decompression module may be configured to input the compressed channel data into the channel decompression model, such that the channel decompression model may decompress the compressed channel data to recover the channel data.

In some embodiments, the channel-data acquisition module may include a channel deriving unit and a data acquisition unit.

The channel derivation unit may be configured to obtain the neighboring reference signal directly mapped onto the time-frequency resource and derive the channel based on the neighboring reference signal.

The data acquisition unit may be configured to obtain the compressed channel data output by the channel compression model and transmitted by the receiving terminal based on the derived channel.

In some embodiments, the channel-data acquisition module may further include a normalization-element acquisition unit.

The normalization-element acquisition unit may be configured to obtain the normalization element used by the receiving terminal during normalization processing on the compressed channel data.

The data acquisition unit may be configured to obtain the compressed channel data output by the channel compression model and transmitted by the receiving terminal based on the derived channel and the normalization element.

In some embodiments, the normalization manner may adopt maximum normalization. In a case where the receiving terminal transmits the compressed channel data in the combined manner, the normalization element may be the maximum modulus in the compressed channel data combination.

In some embodiments, the apparatus may further include a second signal-to-noise ratio acquisition module and a second indication transmitting module.

The second signal-to-noise ratio acquisition module may be configured to re-obtain channel assessment quality.

The second indication transmitting module may be configured to transmit second indication information to the receiving terminal in a case where the channel assessment quality satisfies a second preset threshold. The second indication information may be configured to instruct the receiving terminal to quantize the compressed channel data output by the channel compression model and map the quantized compressed channel data onto the time-frequency resource.

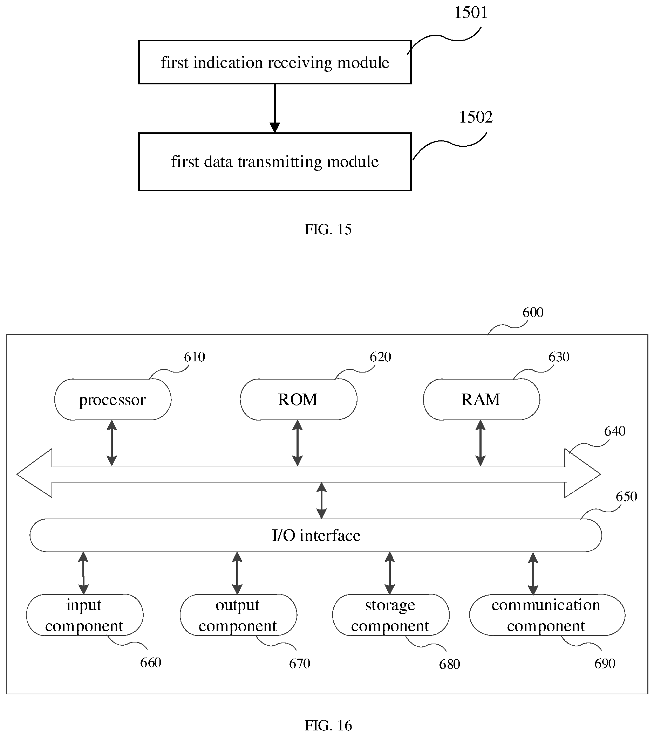

Some embodiments of the present disclosure also provide another channel data transmission apparatus applied to or configured in a receiving terminal. FIG. 15 is a structural schematic view of a channel data transmission apparatus provided by some other embodiments of the present disclosure. As shown in FIG. 15, the apparatus may include a first indication receiving module 1501 and a first data transmitting module 1502.

The first indication receiving module 1501 may be configured to receive first indication information transmitted by a transmitting terminal.

The first data transmitting module 1502 may be configured to directly map compressed channel data output by a channel compression model onto a time-frequency resource based on the first indication information, and transmit the compressed channel data to the transmitting terminal.

In some embodiments, the apparatus may further include a connection establishment module and a sounding module.

The connection establishment module may be configured to establish a radio link control layer connection with the transmitting terminal before the first indication information transmitted by a transmitting terminal is received.

The sounding module may be configured to transmit a sounding reference signal to the transmitting terminal, such that the transmitting terminal may calculate a channel signal-to-noise ratio based on the sounding reference signal.

In some embodiments, the apparatus may further include a model receiving module and a compression module.

The model receiving module may be configured to receive, before the first indication information transmitted by the transmitting terminal is received, a pre-trained channel compression model transmitted by the transmitting terminal.

The compression module may be configured to compress channel data based on the pre-trained channel compression model and output the compressed channel data.

In some embodiments, the apparatus may further include a configuration-information receiving module.

The configuration-information receiving module may be configured to receive first resource configuration information transmitted by the transmitting terminal. The first resource configuration information may be configured to instruct the time-frequency resource required by the receiving terminal for transmission of the compressed channel data and the neighboring reference signal.

The first data transmitting module may be configured to directly map the compressed channel data and the neighboring reference signal onto the time-frequency resource based on the first resource configuration information.

In some embodiments, the neighboring reference signal may be set within a coherence bandwidth of the compressed channel data.

In some embodiments, the compressed channel data may be transmitted in a combined manner or in a non-combined manner. In a case where the compressed channel data are transmitted in the combined manner, the apparatus may further include a combination processing module.

The combination processing module may be configured to perform data combination processing on the compressed channel data output by the channel compression model and obtain at least one compressed channel data combination.

The first data transmitting module may configured to directly map the at least one compressed channel data combination onto the time-frequency resource.

In some embodiments, the apparatus may further include a normalization manner receiving module and a normalization processing module.

The normalization manner receiving module may be configured to receive a normalization manner transmitted by the transmitting terminal.

The normalization processing module may be configured to perform normalization processing on the compressed channel data based on the normalization manner and obtain normalized compressed channel data.

The first data transmitting module may be configured to directly map the normalized compressed channel data onto the time-frequency resource.

In some embodiments, the apparatus may further include a second configuration-information receiving module and a normalization-element transmitting module.

The second configuration-information receiving module may be configured to receive second resource configuration information transmitted by the transmitting terminal. The second resource configuration information may be configured to instruct the time-frequency resource required by the receiving terminal for transmission of a normalization element.

The normalization-element transmitting module may be configured to map the normalization element used in the normalization processing onto the time-frequency resource based on the second resource configuration information, and transmit the normalization element to the transmitting terminal.

In some embodiments, the normalization manner may be maximum normalization.

In a case where the receiving terminal transmits the compressed channel data in the combined manner, the normalization element may be the maximum modulus in the at least one compressed channel data combination.

In some embodiments, the apparatus may further include a second indication receiving module and a second data transmitting module.

The second indication receiving module may be configured to receive second indication information transmitted by the transmitting terminal.

The second data transmitting module may be configured to quantize the compressed channel data output by the channel compression model based on the second indication information, map the quantized compressed channel data onto the time-frequency resource, and transmit the quantized compressed channel data to the transmitting terminal.

The channel data transmission method provided by some embodiments of the present disclosure may correspond to the method embodiments illustrated in FIG. 1 to FIG. 13 and may be capable of implementing corresponding operations and obtaining corresponding technical effects. The embodiments of the present disclosure are not repeated in detail herein, and the methods and achieved technical effects can refer to the above embodiments.

As shown in FIG. 16, FIG. 16 is a structural schematic view of an electronic device applied to solutions provided by some embodiments of the present disclosure. The electronic device 600 may include a mobile receiving terminal such as a mobile phone, a notebook computer, a digital broadcast receiver, a Personal Digital Assistant (PDA), a tablet computer (PAD), a Portable Media Player (PMP), a vehicle-mounted receiving terminal (e.g., a vehicle-mounted navigation terminal), etc., and a fixed terminal such as a digital television, a desktop computer, etc. The electronic device shown is only an example and should not impose any limitation on the functionality and scope of the present disclosure.

As shown in FIG. 16, the electronic device 600 may include a processor 601 (such as a central processing unit, graphics processor, etc.). The processor 601 may be configured to execute various corresponding operations and processing based on a program stored in a Read-Only Memory (ROM) 602 or a program loaded from a storage component 608 to a Random Access Memory (RAM) 603. The RAM 603 may further store various programs and data required for the operations performed by the electronic device 600. The processor 601, the ROM 602 and the RAM 603 may be interconnected through a bus 604. An Input/Output (I/O) interface 605 may also be coupled to the bus 604.

Generally, components coupled to the I/O interface 605 may include: an input component 606 such as a touch screen, a touchpad, a keypad, a mouse, a camera, a microphone, an accelerometer, a gyroscope, etc.; an output component 607 such as a Liquid Crystal Display (LCD) screen, a speaker, a vibrator, etc.; the storage component 608 such as a magnetic tape, a hard disk, etc.; and a communication component 609. The communication component 609 may allow the electronic device 600 to perform wireless or wired communication with other devices to exchange data. Although the electronic device 600 with various components is shown, it should be understood that the electronic device 600 is not required to implement or include all of the shown components. It may be implemented or equipped with more or less components as an alternative.

In particular, according to some embodiments of the present disclosure, the process described above with reference to a flowchart may be implemented as a computer software program. For example, some embodiments of the present disclosure may provide a computer program product including a computer program carried on a non-transitory computer-readable medium. The computer program may include program codes configured to execute the method shown in the flowchart. In such embodiments, the computer program may be downloaded and installed from a network through the communication component 609, or installed from the storage component 608, or installed from the ROM 602. In a case where the computer program is executed by the processor 601, various functions defined in the channel data transmission method and the channel data transmission apparatus of some embodiments of the present disclosure may be executed.

It should be noted that the computer-readable medium shown in the present disclosure may be a computer-readable signal medium, a computer-readable storage medium, or any combination of the two. The computer-readable storage medium may be, for example, but is not limited to, an electrical, magnetic, optical, electromagnetic, infrared, or semiconductor system, apparatus, or component, or device, or any combination of the above. More specific examples of the computer-readable storage medium may include, but are not limited to, an electrical connector with one or more wires, a portable computer disk, a hard disk, an RAM, an ROM, an erasable programmable read-only memory (EPROM or flash memory), an optical fiber, a portable compact disk read-only memory (CD-ROM), an optical memory, a magnetic memory, or any suitable combination of the above. In the present disclosure, the computer-readable storage medium may be any tangible medium containing or storing a program, and the program may be used by an instruction execution system, apparatus, or component, or any combination of the above. In the present disclosure, the computer-readable signal medium may include a data signal transmitted in a baseband or as part of a carrier wave, the data signal carries the computer-readable program code. Such transmitted data signal may take a variety of forms, including but not limited to an electromagnetic signal, an optical signal, or any suitable combination of the above. The computer-readable signal medium may also be any computer-readable storage medium other than a computer-readable storage medium. The computer-readable signal medium may send, transmit, or transfer the program used by the instruction execution system, apparatus, or component, or any combination of the above. The program code included on the computer-readable medium may be transmitted by any suitable medium, including but not limited to wireless, electric wire, optical cable, radio frequency (RF), and the like, or any suitable combination of the above.

In some embodiments, a client terminal and a server may be communicated through any currently known or future developed network protocol such as HyperText Transfer Protocol (HTTP), and may be interconnected with digital data communication (e.g., communication network) in any form or any medium. The communication network may include a local area network ("LAN"), a wide area network ("WAN"), the Internet, and an end-to-end network (for example, the ad hoc end-to-end network), as well as any other currently known or future developed networks.

The computer-readable medium mentioned above may be integrated inside the electronic device or arranged as an independent component separate from the electronic device.

The computer-readable medium mentioned above may store one or more programs. In a case where the one or more programs are executed by an electronic device, the electronic device may be caused to perform: transmitting first indication information to a receiving terminal. The first indication information is configured to instruct the receiving terminal to directly map compressed channel data output by a channel compression model onto a time-frequency resource.

Alternatively, in a case where the one or more programs are executed by the electronic device, the electronic device may be caused to perform: receiving first indication information transmitted by a transmitting terminal, directly mapping compressed channel data output by a channel compression model onto a time-frequency resource based on the first indication information, and transmitting the compressed channel data to the transmitting terminal.

Some embodiments of the present disclosure further provide a computer program product including a computer instruction. In a case where the computer instruction is executed by a processor, the processor is caused to perform the operation of the channel data transmission method according to any one of the above embodiments and achieve the same technical effects. To avoid duplication, details are not repeated herein.

Computer program codes for performing operations of the present disclosure may be written in one or more programming languages or a combination thereof. The programming languages include, but are not limited to, object-oriented programming languages such as Java, Smalltalk, C++, or conventional procedural programming languages such as the "C" language or similar programming languages. The program codes may be executed entirely on a local terminal, partially on the local terminal, as a standalone software package, and partially on the local terminal and partially on a remote computer, or entirely on a remote computer or server. In a case involving the remote computer, the remote computer may be connected to the local terminal through any type of network, including a local area network (LAN) or a wide area network (WAN), or may be connected to an external computer (for example, through the Internet by using an internet service provider).

The flowcharts and block diagrams in the drawings illustrate possible architectures, functions, and operations of systems, methods, and computer program products provided by various embodiments of the present disclosure. In this regard, each block in the flowcharts or block diagrams may mean a module, a program segment, or a part of code. The module, the program segment, or the part of the code includes one or more executable instructions for implementing specified logic functions. It should also be noted that in some alternative implementations, functions indicated in a block may also occur in a sequence different from that indicated in the drawings. For example, two connected blocks may actually be executed in substantially parallel, or they may sometimes be executed in reverse sequence, depending on the functions involved. It should also be noted that each block in the block diagrams and/or flowcharts, and the combination of the blocks in the block diagrams and/or flowcharts may be implemented by a dedicated hardware-based system that performs specified functions or operations, or may be implemented by a combination of dedicated hardware and computer instructions.

The units or the modules described in some embodiments of the present disclosure may be implemented through software or hardware. In some cases, names of the units or the modules do not constitute a limitation on the units or the modules itself.

The functions described herein may be at least partially executed by one or more hardware logic components. For example, without limitation, exemplary types of a hardware logic component that may be used may include: a Field Programmable Gate Array (FPGA), an Application Specific Integrated Circuit (ASIC), an Application Specific Standard Parts (ASSP), a System on Chip (SOC), a Complex Programmable Logic Device (CPLD), or the like.

In the context of the present disclosure, a machine-readable medium may be a tangible medium that may contain or store a program for use by in combination therewith an instruction execution system, an apparatus, or a device. The machine-readable medium may be a machine-readable signal medium or a machine-readable storage medium. The machine-readable medium may include, but is not limited to, an electronic, magnetic, optical, electromagnetic, infrared, or semiconductor system, device, or equipment, or any suitable combination of the above. More examples of the machine-readable medium may include an electrical connection based on one or more wires, a portable computer disk, a hard drive, random access memory (RAM), read-only memory (ROM), erasable programmable read-only memory (EPROM or flash memory), an optical fiber, a portable compact disc read-only memory (CD-ROM), an optical storage device, a magnetic storage device, or any suitable combination of the above.

A computer-readable storage medium is provided by one or more embodiments of the present disclosure. The computer-readable storage medium may be configured to store a computer program to execute the channel data transmission method according to any of the above embodiments of the present disclosure.

The above description is only a preferred embodiment of the present disclosure and merely illustrates underlying technical principles of the present disclosure. Those skilled in the art shall understand that the protection scope of the present disclosure is not limited to technical solutions formed by specific combinations of the foregoing technical features, but also covers any alternative technical solutions obtained by arbitrarily combining the foregoing technical features or equivalent technical features without departing from the above-disclosed concept, for example, a technical solution formed by replacing the foregoing features with (but not limited thereto) technical features with similar functions disclosed in the present disclosure.

In addition, although operations are depicted in a particular order, this should not be understood as requiring the operations to be performed in the particular order shown or in a sequential order. Under certain circumstances, multitasking and parallel processing may be advantageous. Similarly, although several specific implementation details are included in the foregoing discussion, these shall not be construed as limitations to the protection scope of the present disclosure. Features described in separate embodiments may be combined into a single embodiment. On the contrary, various features described in a single embodiment may be implemented individually or in any suitable sub-combination in a plurality of embodiments.

Although the subject matter has been described by language specific to structural features and/or method logic operations, it should be understood that the subject matter defined in the appended claims is not necessarily limited to the specific features or operations described above. On the contrary, the specific features and operations described above are merely exemplary forms of implementing the claims.

## Claims

1. A channel data transmission method, comprising:
receiving first indication information transmitted by a transmitting terminal; and
directly mapping, based on the first indication information, compressed channel data output by a channel compression model onto a time-frequency resource, and transmitting the compressed channel data to the transmitting terminal.

2. The method as claimed in claim 1, further comprising, before receiving the first indication information transmitted by the transmitting terminal:
receiving a pre-trained channel compression model transmitted by the transmitting terminal; and
compressing, based on the pre-trained channel compression model, channel data, and outputting the compressed channel data.

3. The method as claimed in claim 1, wherein the directly mapping, based on the first indication information, the compressed channel data output by the channel compression model onto the time-frequency resource comprises:
directly mapping, based on the first indication information, the compressed channel data output by the channel compression model and a neighboring reference signal onto the time-frequency resource.

4. The method as claimed in claim 3, further comprising:
receiving first resource configuration information transmitted by the transmitting terminal, wherein the first resource configuration information is configured to instruct the time-frequency resource required by the receiving terminal for transmission of the compressed channel data and the neighboring reference signal, and the neighboring reference signal is set within a coherence bandwidth of the compressed channel data;
wherein the directly mapping the compressed channel data and the neighboring reference signal onto the time-frequency resource comprises:
directly mapping, based on the first resource configuration information, the compressed channel data and the neighboring reference signal onto the time-frequency resource.

5. The method as claimed in claim 1, wherein the compressed channel data are transmitted in a combined manner or in a non-combined manner; in a case where the compressed channel data are transmitted in the combined manner, the method further comprises:
performing data combination processing on the compressed channel data output by the channel compression model and obtaining at least one compressed channel data combination;
wherein the directly mapping the compressed channel data output by the channel compression model onto the time-frequency resource comprises:
directly mapping the at least one compressed channel data combination onto the time-frequency resource.

6. The method as claimed in claim 1, further comprising:
receiving a normalization manner transmitted by the transmitting terminal; and
performing, based on the normalization manner, normalization processing on the compressed channel data and obtaining normalized compressed channel data;
wherein the directly mapping the compressed channel data output by the channel compression model onto the time-frequency resource comprises:
directly mapping the normalized compressed channel data onto the time-frequency resource.

7. The method as claimed in claim 6, further comprising:
receiving second resource configuration information transmitted by the transmitting terminal, wherein the second resource configuration information is configured to instruct the time-frequency resource required by the receiving terminal for transmission of a normalization element; and
mapping, based on the second resource configuration information, the normalization element used in the normalization processing onto the time-frequency resource, and transmitting the normalization element to the transmitting terminal.

8. The method as claimed in claim 1, further comprising:
receiving second indication information transmitted by the transmitting terminal; and
quantizing, based on the second indication information, the compressed channel data output by the channel compression model, mapping the quantized compressed channel data onto the time-frequency resource, and transmitting the quantized compressed channel data to the transmitting terminal.

9. A channel data transmission method, comprising:
transmitting first indication information to a receiving terminal, wherein the first indication information is configured to instruct the receiving terminal to directly map compressed channel data output by a channel compression model onto a time-frequency resource.

10. The method as claimed in claim 9, wherein the first indication information is further configured to instruct the receiving terminal to directly map a neighboring reference signal onto the time-frequency resource.

11. The method as claimed in claim 9, further comprising, before transmitting the first indication information to the receiving terminal:
obtaining channel assessment quality;
wherein the transmitting the first indication information to the receiving terminal comprises:
transmitting the first indication information to the receiving terminal in a case where the channel assessment quality satisfies a first preset threshold.

12. The method as claimed in claim 9, further comprising:
obtaining a pre-trained channel compression model, a pre-trained channel decompression model and the quantity of the compressed channel data input into the channel decompression model; and
transmitting the pre-trained channel compression model to the receiving terminal.

13. The method as claimed in claim 9, further comprising:
obtaining a normalization manner adopted by the receiving terminal to perform normalization processing on the compressed channel data output by the channel compression model; and
transmitting the normalization manner to the receiving terminal.

14. The method as claimed in any one of claims 10 to 13, further comprising:
transmitting first resource configuration information to the receiving terminal, wherein the first resource configuration information is configured to instruct the time-frequency resource required by the receiving terminal for transmission of the compressed channel data and the neighboring reference signal, and the neighboring reference signal is set within a coherence bandwidth of the compressed channel data.

15. The method as claimed in claim 14, further comprising, before transmitting the first resource configuration information to the receiving terminal:
obtaining the quantity of the compressed channel data input into the channel decompression model and the quantity of neighboring reference signals; and
determining, based on the quantity of the compressed channel data input into the channel decompression model and the quantity of neighboring reference signals, the time-frequency resource required by the receiving terminal for transmission of the compressed channel data and the neighboring reference signal.

16. The method as claimed in claim 14, wherein the receiving terminal transmits the compressed channel data in a combined manner or in a non-combined manner.

17. The method as claimed in claim 14, further comprising:
transmitting second resource configuration information to the receiving terminal, wherein the second resource configuration information is configured to instruct the time-frequency resource required by the receiving terminal for transmission of a normalization element.

18. The method as claimed in claim 17, further comprising:
obtaining the compressed channel data output by the channel compression model and transmitted by the receiving terminal; and
inputting the compressed channel data into the channel decompression model, such that the channel decompression model decompresses the compressed channel data to recover the channel data;
wherein the obtaining the compressed channel data output by the channel compression model and transmitted by the receiving terminal comprises:
obtaining the neighboring reference signal directly mapped onto the time-frequency resource, and deriving a channel based on the neighboring reference signal; and
obtaining, based on the derived channel, the compressed channel data output by the channel compression model and transmitted by the receiving terminal.

19. The method as claimed in claim 18, further comprising:
obtaining the normalization element used by the receiving terminal during normalization processing on the compressed channel data;
wherein the obtaining, based on the derived channel, the compressed channel data output by the channel compression model and transmitted by the receiving terminal comprises:
obtaining, based on the derived channel and the normalization element, the compressed channel data output by the channel compression model and transmitted by the receiving terminal.

20. The method as claimed in claim 9, further comprising:
re-obtaining the channel assessment quality; and
transmitting second indication information to the receiving terminal in a case where the channel assessment quality satisfies a second preset threshold, wherein the second indication information is configured to instruct the receiving terminal to quantize the compressed channel data output by the channel compression model and map the quantized compressed channel data onto the time-frequency resource.

21. A channel data transmission apparatus configured in a receiving terminal, the apparatus comprising:
a first indication receiving module, configured to receive first indication information transmitted by a transmitting terminal; and
a first data transmitting module, configured to directly map compressed channel data output by a channel compression model onto a time-frequency resource based on the first indication information, and transmit the compressed channel data to the transmitting terminal.

22. A channel data transmission apparatus, comprising:
a first indication transmitting module, configured to transmit first indication information to a receiving terminal, wherein the first indication information is configured to instruct the receiving terminal to directly map compressed channel data output by a channel compression model onto a time-frequency resource.

23. An electronic device, comprising:
a processor; and
a memory, configured to store an executable instruction for the processor;
wherein the processor is configured to read the executable instruction from the memory and execute the instruction to implement the channel data transmission method as claimed in any one of claims 1-8 or the channel data transmission method as claimed in any one of claims 9-20.

24. A computer-readable storage medium, storing a computer program, wherein the computer program is configured to implement the channel data transmission method as claimed in any one of claims 1-8 or the channel data transmission method as claimed in any one of claims 9-20.

25. A computer program product, comprising a computer instruction, wherein the computer instruction is configured to be executed by a processor to implement the channel data transmission method as claimed in any one of claims 1-8 or the channel data transmission method as claimed in any one of claims 9-20.
